# EUROPEAN PATENT APPLICATION

(11) **EP 3 616 973 A1**
(43) Date of publication of application: **04.03.2020**
(21) Application number: 19184563.5
(22) Date of filing: 05.07.2019
(51) Int. Cl.: B60L 3/00, H02J 7/14, B60L 58/20

(54) **VEHICLE POWER SOURCE SYSTEM**

(30) Priority: 29.08.2018 JP 2018160103
(71) Applicant: YAZAKI CORPORATION, Minato-ku, Tokyo 108-8333 (JP)
(72) Inventor: SASAHARA, Masato, Susono-shi, Shizuoka 410-1194 (JP); IZAWA, Takaaki, Susono-shi, Shizuoka 410-1194 (JP)
(74) Representative: Grünecker Patent- und Rechtsanwälte PartG mbB

(57) **Abstract**

In the vehicle power source system (1), a main battery (12) accumulates DC power converted by a high-voltage DC/DC converter (11), and supplies the DC power to at least a first load (2). A main controller (14) is operated by a first control program, and controls the high-voltage DC/DC converter (11) according to an accumulation state of the main battery (12). A backup battery (23) accumulates the DC power converted by a low-voltage DC/DC converter (22), and supplies the DC power to a second load (3). A backup controller (26) is operated by a second control program different from the first control program, and controls the low-voltage DC/DC converter (22) according to an accumulation state of the backup battery (23).

## Description

### BACKGROUND OF THE INVENTION

### 1. Field of the Invention

The present invention relates to a vehicle power source system.

### 2. Description of the Related Art

Conventionally, as a vehicle power source system, for example, there is a power source system which includes a first power source system to supply power to a first load and a second load of a vehicle. Herein, the second load is configured to include a minimum number of loads required to run the vehicle for example. The power source system may include a second power source system which supplies power to the second load in a case where an abnormality occurs in the first power source system. The power source system can run the vehicle temporarily even in a case where an abnormality occurs in the first power source system by adding the second power source system, and failure resistance can be improved. Further, Japanese Patent Application Laid-open No. 2016-7993 discloses a power source system for a vehicle which includes a main battery to supply power to a load, a sub-battery to supply power to the load, and a relay unit to switch the main battery and the sub-battery.

By the way, the above power source system is desirably able to be easily added to the second power source system in a case where the second power source system is added to the vehicle where the first power source system is mounted for example.

### SUMMARY OF THE INVENTION

The present invention has been made in view of the above circumstances, and an object thereof is to provide a vehicle power source system which can improve a mounting performance of a power source device.

In order to solve the above mentioned problem and achieve the object, a vehicle power source system according to one aspect of the present invention includes a main power source device including a first DC/DC converter that is mounted in a vehicle and converts a voltage of DC power output from a power supply unit, a first battery that accumulates the DC power converted by the first DC/DC converter and supplies the DC power to at least a first load, and a first controller that is operated by a first control program and controls the first DC/DC converter according to an accumulation state of the first battery; and a backup power source device including a second DC/DC converter that is mounted in the vehicle, connected to the first DC/DC converter, and converts a voltage of DC power output from the first DC/DC converter, a second battery that accumulates the DC power converted by the second DC/DC converter and supplies the DC power to a second load, and a second controller that is operated by a second control program different from the first control program and controls the second DC/DC converter according to an accumulation state of the second battery.

According to another aspect of the present invention, in the power transmission unit, it is preferable that at a normal time of the main power source device, the main power source device supplies the DC power from the first DC/DC converter or the first battery to the first load, and supplies the DC power from the first DC/DC converter or the first battery to the second load through the second DC/DC converter, and at an abnormal time of the main power source device, the main power source device does not supply the DC power to the first load and the second load.

According to still another aspect of the present invention, in the power transmission unit, it is preferable that at a normal time of the main power source device, the backup power source device does not supply the DC power from the second battery to the first load and the second load, and at an abnormal time of the main power source device, the backup power source device supplies the DC power from the second battery to the second load, and does not supply the DC power from the second battery to the first load.

According to still another aspect of the present invention, in the power transmission unit, it is preferable that at an abnormal time of the backup power source device or the main power source device, the backup power source device blocks a current path between the backup power source device and the main power source device.

According to still another aspect of the present invention, in the power transmission unit, it is preferable that the main power source device includes a first memory unit that stores the first control program, and the backup power source device includes a second memory unit that is different from the first memory unit and stores the second control program.

According to still another aspect of the present invention, in the power transmission unit, it is preferable that the backup power source device includes at least a housing that accommodates the second DC/DC converter and the second controller.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating an exemplary configuration of a vehicle power source system according to an embodiment;
FIG. 2 is a block diagram illustrating an exemplary operation at a normal time of a main power source device according to an embodiment;
FIG. 3 is a block diagram illustrating an exemplary operation at an abnormal time of the main power source device according to an embodiment;
FIG. 4 is a diagram illustrating charging control according to an embodiment;
FIG. 5 is a diagram illustrating discharging control according to an embodiment;
FIG. 6 is a diagram illustrating the charging control and the discharging control according to an embodiment; and
FIG. 7 is a flowchart illustrating an exemplary operation of the vehicle power source system according to an embodiment.

### DETAILED DESCRIPTION OF THE PREFERRED EMBODIMENTS

Modes (embodiments) for carrying out the invention will be described in detail with reference to the drawings. The invention is not limited to the content described in the embodiments below. In addition, the components described below are easily conceivable to a person skilled in the art, and the substantially same components will be contained. Further, the configuration described below may be combined appropriately. In addition, various omissions, replacement, or changes may be made in the configurations within a scope not departing from the spirit of the invention.

### Embodiments

A vehicle power source system 1 according to an embodiment will be described with reference to the drawings.

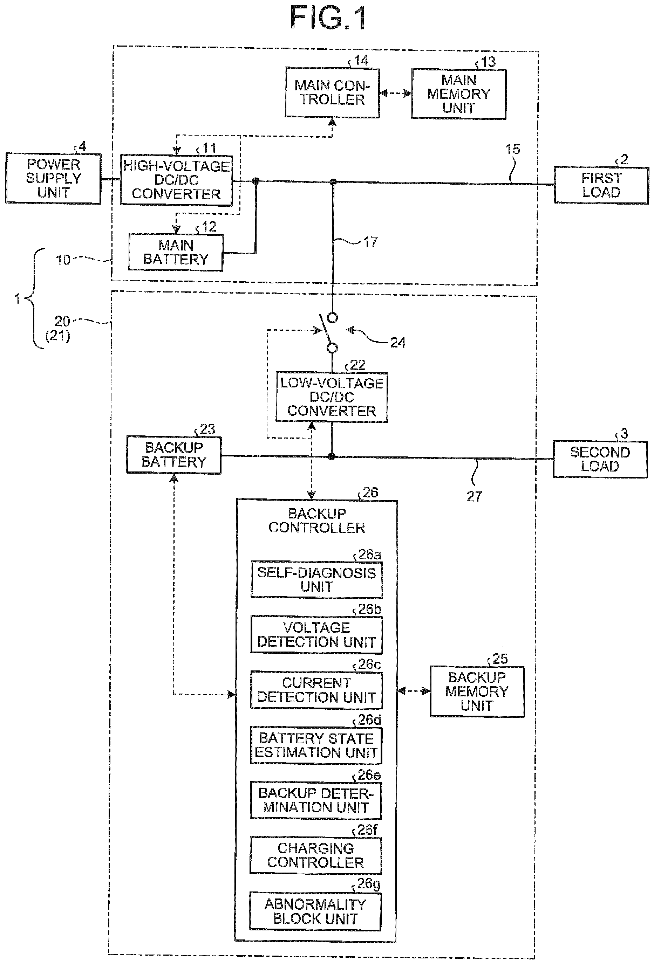

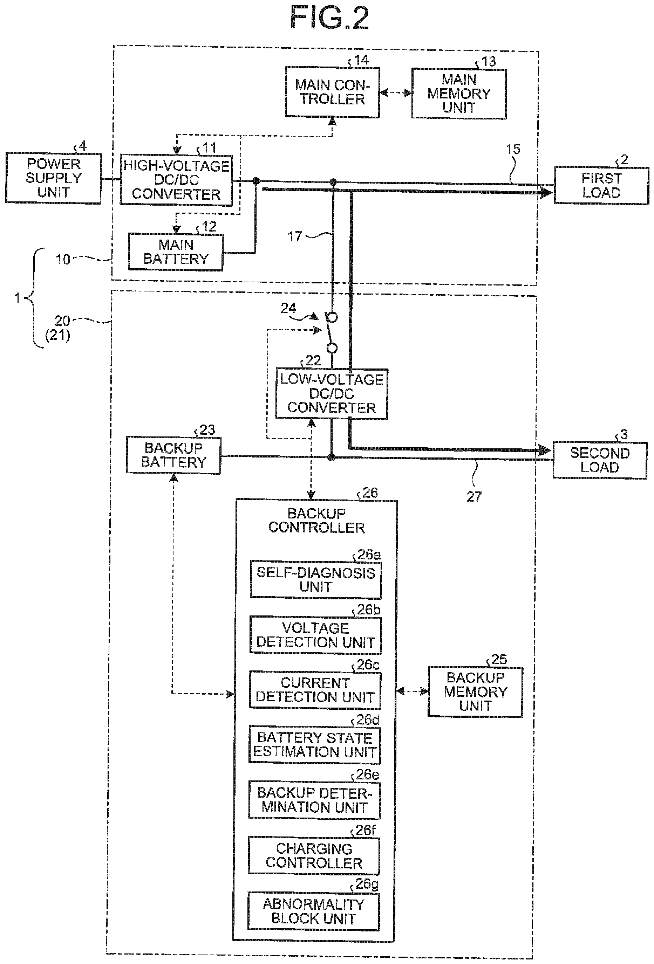

FIG. 1 is a block diagram illustrating an exemplary configuration of the vehicle power source system 1 according to the embodiment. FIG. 2 is a block diagram illustrating an exemplary operation at a normal time of a main power source device 10 according to the embodiment.

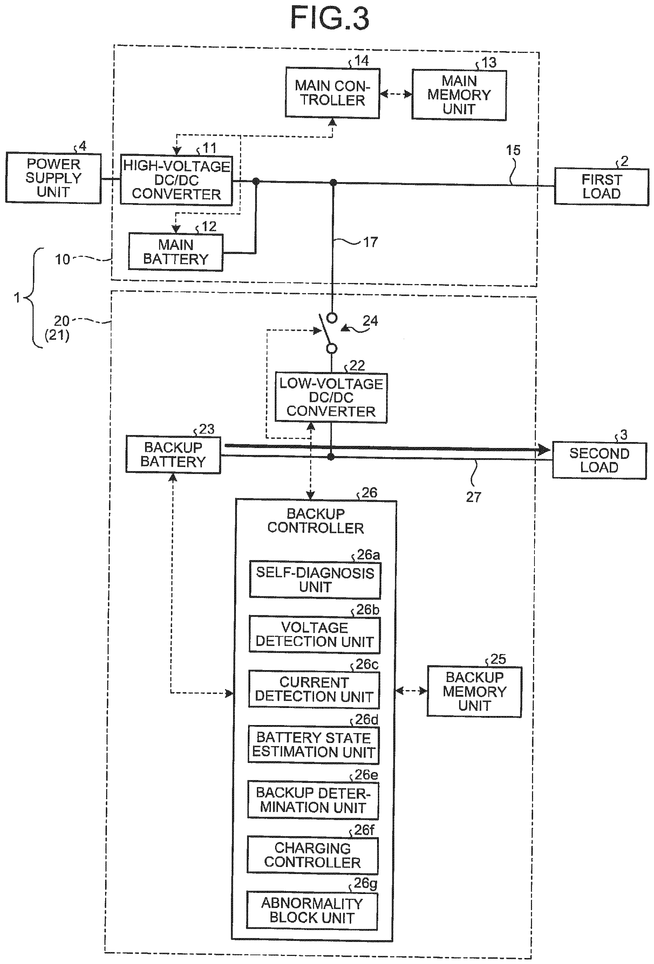

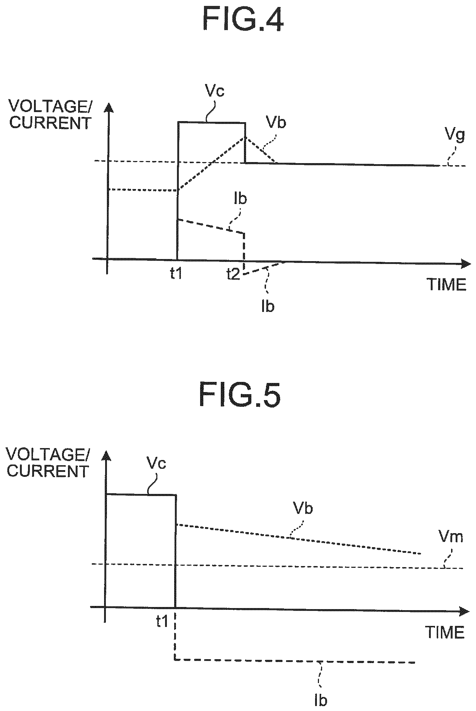

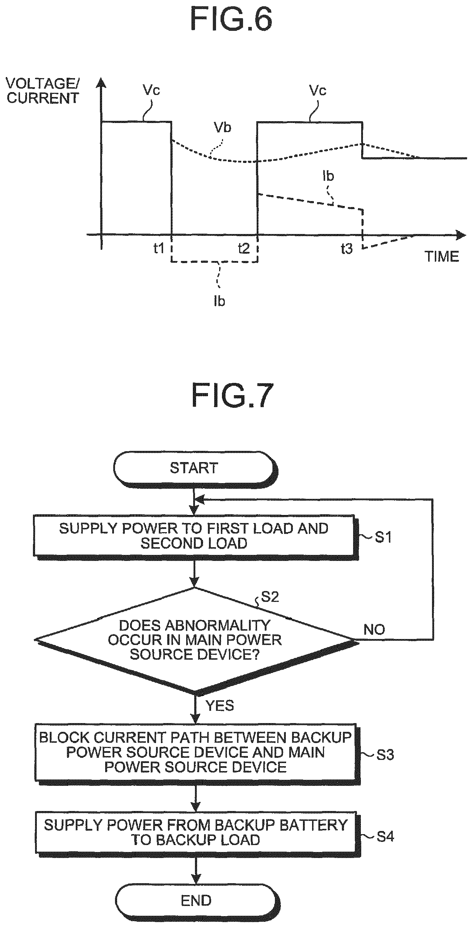

FIG. 3 is a block diagram illustrating an exemplary operation at an abnormal time of the main power source device 10 according to the embodiment. FIG. 4 is a diagram illustrating charging control according to the embodiment, in which the vertical axis represents voltage or current, and the horizontal axis represents time. FIG. 5 is a diagram illustrating discharging control according to the embodiment, in which the vertical axis represents voltage or current, and the horizontal axis represents time. FIG. 6 is a diagram illustrating the charging control and the discharging control according to the embodiment, in which the vertical axis represents voltage or current, and the horizontal axis represents time. FIG. 7 is a flowchart illustrating an exemplary operation of the vehicle power source system 1 according to the embodiment.

The vehicle power source system 1 is mounted in a vehicle, and supplies DC power (simply referred to as "power") to a first load 2 and a second load 3. Herein, the first load 2 is configured to include, for example, a general load such as an air conditioner and an audio system, and a main load such as a steering, a brake, and a sensor. The second load 3 is configured to include, for example, the main load such as the steering, the brake, and the sensor. The vehicle power source system 1 includes a main power source device 10 and a backup power source device 20 as illustrated in FIG. 1.

The main power source device 10 supplies power to the first load 2 and the second load 3. The main power source device 10 includes a high-voltage DC/DC converter 11, a main battery 12, a main memory unit 13, and a main controller 14. The high-voltage DC/DC converter 11 converts a DC voltage. The high-voltage DC/DC converter 11 is connected to, for example, a power supply unit 4, and drops the voltage of the DC power output from the power supply unit 4. The high-voltage DC/DC converter 11 is connected to the main battery 12, and outputs the dropped DC power to the main battery 12. In addition, the high-voltage DC/DC converter 11 is connected to the first load 2 through a current path 15, and is connected to the second load 3 through a low-voltage DC/DC converter 22. The high-voltage DC/DC converter 11 supplies power to the first load 2 through the current path 15 as illustrated in FIG. 2, and supplies power to the second load 3 through the low-voltage DC/DC converter 22.

The main battery 12 accumulates power and is, for example, a lead battery. The main battery 12 is connected to the high-voltage DC/DC converter 11, and accumulates the DC power which is dropped by the high-voltage DC/DC converter 11. The main battery 12 is connected to the first load 2 through the current path 15, and is connected to the second load 3 through the low-voltage DC/DC converter 22. The main battery 12 supplies power to the first load 2 through the current path 15 as illustrated in FIG. 2, and supplies power to the second load 3 through the low-voltage DC/DC converter 22.

The main memory unit 13 is a memory to store information. The main memory unit 13 stores a first control program to operate the main controller 14.

The main controller 14 controls the high-voltage DC/DC converter 11. The main controller 14 is configured to include an electronic circuit containing a well-known microcomputer as a main component including a CPU and an interface. The main controller 14 is connected to the main memory unit 13, and reads out the first control program stored in the main memory unit 13. Then, the main controller 14 is operated by the read first control program. The main controller 14 monitors an accumulation state of the main battery 12 on the basis of, for example, the first control program, and controls the high-voltage DC/DC converter 11 according to the accumulation state of the main battery 12. For example, in a case where the state of charge of the main battery 12 is less than a predetermined first reference value, the main controller 14 raises the output voltage of the high-voltage DC/DC converter 11 to charge the main battery 12. In addition, in a case where the state of charge of the main battery 12 is equal to or more than the first reference value, the main controller 14 drops the output voltage of the high-voltage DC/DC converter 11 to keep the state of charge of the main battery 12.

The backup power source device 20 supplies power to the second load 3 in replacement of the main power source device 10 at an abnormal time when the main power source device 10 is short-circuited. The backup power source device 20 is connected to the main power source device 10 and the second load 3 through a connector (not illustrated) for example. The backup power source device 20 includes a housing 21, the low-voltage DC/DC converter 22, a backup battery 23, a switch circuit 24, a backup memory unit 25, and a backup controller 26.

The housing 21 accommodates various types of electronic components. The housing 21 is formed in a box shape which has a heat dissipation function. The housing 21 is configured separately from the main power source device 10. The housing 21 accommodates the low-voltage DC/DC converter 22, the backup battery 23, the switch circuit 24, the backup memory unit 25, and the backup controller 26 therein. Further, the backup battery 23 may be attached to the outside of the housing 21 instead of being accommodated in the housing 21.

The low-voltage DC/DC converter 22 converts a DC voltage, and raises or drops the voltage. In a case where the backup battery 23 needs to be charged, the low-voltage DC/DC converter 22 is connected to the high-voltage DC/DC converter 11, receives the DC power which is converted from high to low and output by the high-voltage DC/DC converter 11, and raises the voltage to be equal to or more than the terminal voltage of the backup battery 23. The low-voltage DC/DC converter 22 is connected to the backup battery 23, and outputs the boosted DC power to the backup battery 23.

The backup battery 23 accumulates power and is, for example, a lithium-ion battery. The backup battery 23 is connected to the low-voltage DC/DC converter 22, and accumulates the DC power boosted by the low-voltage DC/DC converter 22. The backup battery 23 is connected to the second load 3, and supplies the accumulated DC power to the second load 3 as illustrated in FIG. 3.

The switch circuit 24 passes or blocks the current. The switch circuit 24 is provided between the main power source device 10 and the backup power source device 20. The switch circuit 24 is provided between the high-voltage DC/DC converter 11 and the low-voltage DC/DC converter 22 for example. The switch circuit 24 turns on or off the electrical connection between the high-voltage DC/DC converter 11 and the low-voltage DC/DC converter 22. The switch circuit 24 is connected to the backup controller 26, and receives an ON signal to turn on the switch circuit 24, or an OFF signal to turn off the switch circuit 24 from the backup controller 26. The switch circuit 24 is turned on to pass the current on the basis of the ON signal, and turned off to block the current on the basis of the OFF signal. The switch circuit 24 receives the OFF signal from the backup controller 26, for example, at an abnormal time of the backup power source device 20 or the main power source device 10, and blocks a current path 17 between the backup power source device 20 and the main power source device 10. In addition, the switch circuit 24 receives the ON signal from the backup controller 26 at a normal time of the backup power source device 20 and the main power source device 10, and passes the current to the current path 17 between the backup power source device 20 and the main power source device 10.

The backup memory unit 25 is a memory to store information. The backup memory unit 25 is a memory unit different from the main memory unit 13, and stores a second control program to operate the backup controller 26. The second control program is a program different from the first control program. In other words, the second control program is recorded with source codes different from the first control program.

The backup controller 26 controls the low-voltage DC/DC converter 22. The backup controller 26 is configured to include an electronic circuit containing a well-known microcomputer as a main component including a CPU and an interface. The backup controller 26 is connected to the backup memory unit 25, and reads out the second control program stored in the backup memory unit 25. Then, the backup controller 26 is operated by the read second control program. The backup controller 26 includes, for example, a self-diagnosis unit 26a, a voltage detection unit 26b, a current detection unit 26c, a battery state estimation unit 26d, a backup determination unit 26e, a charging controller 26f, and an abnormality block unit 26g.

The self-diagnosis unit 26a diagnoses the backup power source device 20. The self-diagnosis unit 26a diagnoses, for example, the operations of the low-voltage DC/DC converter 22 and the switch circuit 24. The self-diagnosis unit 26a performs, for example, an operation check of the switch circuit 24 immediately after the backup power source device 20 is activated. In a case where a normal operation of the switch circuit 24 is checked, the self-diagnosis unit 26a outputs a self-diagnosis normality signal indicating a normality of the switch circuit 24 to the backup determination unit 26e. On the other hand, in a case where it is checked that the switch circuit 24 is abnormal, the self-diagnosis unit 26a outputs a self-diagnosis abnormality signal indicating an abnormality of the switch circuit 24 to the backup determination unit 26e. The self-diagnosis unit 26a diagnoses the backup power source device 20 immediately after the backup power source device 20 is activated, and regularly after the backup power source device 20 is activated.

The voltage detection unit 26b detects a voltage. The voltage detection unit 26b is connected to the backup battery 23, and detects the output voltage of the backup battery 23. The voltage detection unit 26b outputs a battery voltage Vb indicating the detected output voltage of the backup battery 23 to the battery state estimation unit 26d and the charging controller 26f.

The current detection unit 26c detects a current. The current detection unit 26c is connected to the backup battery 23, and detects the output current of the backup battery 23. The current detection unit 26c outputs a battery current Ib indicating the detected output current of the backup battery 23 to the battery state estimation unit 26d.

The battery state estimation unit 26d estimates the state of the backup battery 23. The battery state estimation unit 26d obtains the state of charge of the backup battery 23 on the basis of the battery voltage Vb output from the voltage detection unit 26b for example, and outputs the obtained state of charge of the backup battery 23 to the backup determination unit 26e. In addition, the battery state estimation unit 26d obtains an internal resistance of the backup battery 23 on the basis of the battery voltage Vb output from the voltage detection unit 26b and the battery current Ib output from the current detection unit 26c, and outputs the obtained internal resistance to the backup determination unit 26e.

The backup determination unit 26e determines whether a backup process is possible. In a case where the self-diagnosis abnormality signal is input from the self-diagnosis unit 26a, the backup determination unit 26e determines that the backup process is not possible. In addition, in a case where the state of charge of the backup battery 23 output from the battery state estimation unit 26d is less than a predetermined second reference value, the backup determination unit 26e determines that the backup process is not possible. On the other hand, the backup determination unit 26e receives the self-diagnosis normality signal from the self-diagnosis unit 26a. In a case where the state of charge of the backup battery 23 output from the battery state estimation unit 26d is equal to or more than the second reference value, the backup determination unit 26e determines that the backup process is possible. Further, the backup determination unit 26e may determine whether the backup battery 23 is degraded on the basis of the internal resistance output from the battery state estimation unit 26d, and determine whether the backup process is not possible according to the degree of degradation.

The charging controller 26f charges the backup battery 23 on the basis of the charging (discharging) state of the backup battery 23. The charging controller 26f controls the low-voltage DC/DC converter 22 on the basis of the battery voltage Vb output from the voltage detection unit 26b and a predetermined target voltage Vg for example, and charges the backup battery 23. The charging controller 26f controls an output voltage (charging voltage) Vc of the low-voltage DC/DC converter 22 such that the battery voltage Vb becomes equal to the target voltage Vg as illustrated in FIG. 4 for example. Since the battery voltage Vb is smaller than the target voltage Vg at time t1 illustrated in FIG. 4, the charging controller 26f supplies the power (the output voltage Vc) to the backup battery 23 through the low-voltage DC/DC converter 22. At this time, the output voltage Vc is a voltage higher than the target voltage Vg. Since the battery voltage Vb is larger than the target voltage Vg at time t2, the charging controller 26f drops the output voltage Vc down to a voltage equal to the target voltage Vg. With this configuration, the charging controller 26f can make the battery voltage Vb equal to the target voltage Vg. Further, the battery current Ib flows from the low-voltage DC/DC converter 22 to the backup battery 23 between time t1 to time t2, so that the backup battery 23 is charged. After time t2, the battery current Ib is discharged until the battery voltage Vb becomes equal to the target voltage Vg.

The abnormality block unit 26g detects an abnormality to block the current path 17. In a case where an abnormality such as a short circuit is not detected in the main power source device 10 or the backup power source device 20, the abnormality block unit 26g outputs the ON signal to the switch circuit 24 to pass the current to the current path 17 between the main power source device 10 and the backup power source device 20. On the other hand, in a case where an abnormality such as a short circuit occurs in, for example, the main power source device 10, the abnormality block unit 26g outputs the OFF signal to the switch circuit 24 to block the current path 17 between the main power source device 10 and the backup power source device 20. The abnormality block unit 26g supplies power from the backup battery 23 to the second load 3 after the current path is blocked by the switch circuit 24.

For example, as illustrated in FIG. 5, in a case where an abnormality such as a short circuit is detected in the main power source device 10 at time t1, the abnormality block unit 26g turns off the switch circuit 24 to stop supplying the power (the output voltage Vc) from the low-voltage DC/DC converter 22. If the supplying of the power (the output voltage Vc) from the low-voltage DC/DC converter 22 is stopped, the backup battery 23 supplies the power (the battery voltage Vb) to the second load 3. At this time, the backup battery 23 gradually drops the battery voltage Vb as time passes as illustrated in FIG. 5. Then, the backup battery 23 supplies the power to the second load 3 until the battery voltage Vb reaches a maximum allowable voltage Vm for driving the second load 3. At this time, the battery current Ib flows, and the backup battery 23 is discharged.

The abnormality block unit 26g stops supplying the power (the output voltage Vc) from the low-voltage DC/DC converter 22 between time t1 to time t2 as illustrated in FIG. 6 for example, and supplies the power (the battery voltage Vb) from the backup battery 23 to the second load 3. At this time, the battery current Ib flows to the second load 3, and the backup battery 23 is discharged. After discharging, the charging controller 26f supplies the power (the output voltage Vc) from the low-voltage DC/DC converter 22 between time t2 to time t3 since the battery voltage Vb is lowered by the discharging of the backup battery 23 as illustrated in FIG. 6, and changes the backup battery 23.

Next, an exemplary operation of the vehicle power source system 1 will be described with reference to FIG. 7. The main power source device 10 of the vehicle power source system 1 supplies power to the first load 2 and the second load 3 (Step S1).

Next, the backup power source device 20 determines whether an abnormality such as a short circuit occurs in the main power source device 10 (Step S2). In a case where an abnormality such as a short circuit occurs in the main power source device 10 (Step S2; Yes), the backup power source device 20 blocks the current path 17 between the backup power source device 20 and the main power source device 10 by the abnormality block unit 26g (Step S3). For example, the abnormality block unit 26g turns off the switch circuit 24 to stop supplying the power (the output voltage Vc) from the low-voltage DC/DC converter 22. Next, the backup power source device 20 supplies power from the backup battery 23 to the second load 3 as illustrated in FIG. 3 (Step S4). At this time, the backup power source device 20 does not supply power from the backup battery 23 to the first load 2.

As described above, the vehicle power source system 1 according to the embodiment includes the main power source device 10 and the backup power source device 20. The main power source device 10 includes the high-voltage DC/DC converter 11, the main battery 12, and the main controller 14. The high-voltage DC/DC converter 11 is mounted in a vehicle, and converts the voltage of the DC power output from the power supply unit 4. The main battery 12 accumulates the DC power converted by the high-voltage DC/DC converter 11, and supplies the DC power to at least the first load 2. The main controller 14 is operated by the first control program, and controls the high-voltage DC/DC converter 11 according to the accumulation state of the main battery 12.

The backup power source device 20 includes the low-voltage DC/DC converter 22, the backup battery 23, and the backup controller 26. The low-voltage DC/DC converter 22 is mounted in a vehicle, connected to the high-voltage DC/DC converter 11, and converts the voltage of the DC power output from the high-voltage DC/DC converter 11. The backup battery 23 accumulates the DC power converted by the low-voltage DC/DC converter 22, and supplies the DC power to the second load 3. The backup controller 26 is operated by the second control program different from the first control program, and controls the low-voltage DC/DC converter 22 according to an accumulation state of the backup battery 23.

With this configuration, the vehicle power source system 1 can run the vehicle up to a safety place by operating the second load 3 by the backup power source device 20 in a case where an abnormality occurs in the main power source device 10. In addition, since the backup controller 26 is operated by the second control program different from the main controller 14, the vehicle power source system 1 can add the backup power source device 20 to the vehicle without changing the specification of the first control program of the main power source device 10. In addition, the vehicle power source system 1 can set the same specification of the first control program of the main power source device 10 to a vehicle with the backup power source device 20 mounted therein and a vehicle with no backup power source device 20 mounted therein. With this configuration, the vehicle power source system 1 can easily add the backup power source device 20, and can improve the mounting performance of the backup power source device 20. The backup power source device 20 is determined to be mounted in a vehicle depending on an automatic driving level for example, and currently is not mounted in many vehicles. Therefore, the invention has a merit on that the mounting to a vehicle is easily made.

In the vehicle power source system 1, the main power source device 10 supplies the DC power from the high-voltage DC/DC converter 11 or the main battery 12 to the first load 2 at a normal time of the main power source device 10, and supplies the DC power from the high-voltage DC/DC converter 11 or the main battery 12 to the second load 3 through the low-voltage DC/DC converter 22. In addition, the main power source device 10 does not supply the DC power from the main power source device 10 to the first load 2 and the second load 3 at an abnormal time of the main power source device 10. With this configuration, the vehicle power source system 1 operates the high-voltage DC/DC converter 11 or the main battery 12 at a normal time of the main power source device 10 to drive the first load 2 and the second load 3, so that the vehicle can be ran normally.

In the vehicle power source system 1, the backup power source device 20 does not supply the DC power from the backup battery 23 to the first load 2 and the second load 3 at a normal time of the main power source device 10. In addition, the DC power is supplied from the backup battery 23 to the second load 3 through a current path 27 at an abnormal time of the main power source device 10. The DC power is not supplied from the backup battery 23 to the first load 2. With this configuration, even in a case where an abnormality occurs in the main power source device 10 and the power is not possible to be supplied from the main power source device 10, the vehicle power source system 1 operates the second load 3 by the backup power source device 20, so that the vehicle can be ran up to a safety place.

In the vehicle power source system 1, the backup power source device 20 blocks the current path 17 between the backup power source device 20 and the main power source device 10 at an abnormal time of the backup power source device 20 or the main power source device 10. The vehicle power source system 1 can separate a device where a short circuit occurs from a normal device by blocking the current path 17, and can operate the normal device appropriately.

In the vehicle power source system 1, the main power source device 10 includes the main memory unit 13 which stores the first control program. In addition, the backup power source device 20 is a memory unit different from the main memory unit 13, and includes the backup memory unit 25 which stores the second control program. With this configuration, the vehicle power source system 1 can add the backup power source device 20 to a vehicle without changing the specification of the first control program of the main power source device 10.

In the vehicle power source system 1, the backup power source device 20 includes at least the housing 21 which accommodates the low-voltage DC/DC converter 22 and the backup controller 26. With this configuration, the backup power source device 20 can be easily mounted on the vehicle later, and the mounting performance of the backup power source device 20 can be improved.

Further, the above explanation has been made about an example that the main power source device 10 supplies power from the high-voltage DC/DC converter 11 or the main battery 12 to the first load 2 and the second load 3 at a normal time of the main power source device 10, but the invention is not limited thereto. The main power source device 10 may be configured such that the power is supplied to the first load 2 instead of supplying the power from the high-voltage DC/DC converter 11 or the main battery 12 to the second load 3 for example, at a normal time of the main power source device 10.

In addition, the backup power source device 20 may be configured such that the power is supplied from the backup battery 23 to the first load 2 at an abnormal time of the main power source device 10.

In addition, the first load 2 has been described to include a general load such as an air conditioner and an audio system, and a main load such as a steering, a brake, and a sensor, and the second load 3 has been described to include a main load such as a steering, a brake, and a sensor, but the invention is not limited thereto.

In addition, the backup power source device 20 has been described about an example which is applied to an automatic driving vehicle, but the invention is not limited thereto. The invention may be applied to a vehicle other than the automatic driving vehicle.

In the vehicle power source system according to the embodiment, the backup power source device is operated by the second control program different from the first control program which operates the main power source device. Therefore, it is possible to improve a mounting performance of the backup power source device.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A vehicle power source system (1), comprising:
a main power source device (10) including a first DC/DC converter (11) that is mounted in a vehicle and converts a voltage of DC power output from a power supply unit (4), a first battery (12) that accumulates the DC power converted by the first DC/DC converter (11) and supplies the DC power to at least a first load (2), and a first controller (14) that is operated by a first control program and controls the first DC/DC converter (11) according to an accumulation state of the first battery (12); and
a backup power source device (20) including a second DC/DC converter (22) that is mounted in the vehicle, connected to the first DC/DC converter (11), and converts a voltage of DC power output from the first DC/DC converter (11), a second battery (23) that accumulates the DC power converted by the second DC/DC converter (22) and supplies the DC power to a second load (3), and a second controller (26) that is operated by a second control program different from the first control program and controls the second DC/DC converter (22) according to an accumulation state of the second battery (23).

2. The vehicle power source system (1) according to claim 1, wherein
at a normal time of the main power source device (10), the main power source device (10) supplies the DC power from the first DC/DC converter (11) or the first battery (12) to the first load (2), and supplies the DC power from the first DC/DC converter (11) or the first battery (12) to the second load (3) through the second DC/DC converter (22), and
at an abnormal time of the main power source device (10), the main power source device (10) does not supply the DC power to the first load (2) and the second load (3).

3. The vehicle power source system (1) according to claim 1 or 2, wherein
at a normal time of the main power source device (10), the backup power source device (20) does not supply the DC power from the second battery (23) to the first load (2) and the second load (3), and
at an abnormal time of the main power source device (10), the backup power source device (20) supplies the DC power from the second battery (23) to the second load (3), and does not supply the DC power from the second battery (23) to the first load (2).

4. The vehicle power source system (1) according to any one of claims 1 to 3, wherein
at an abnormal time of the backup power source device (20) or the main power source device (10), the backup power source device (20) blocks a current path between the backup power source device (20) and the main power source device (10) .

5. The vehicle power source system (1) according to any one of claims 1 to 4, wherein
the main power source device (10) includes a first memory unit (13) that stores the first control program, and
the backup power source device (20) includes a second memory unit (25) that is different from the first memory unit (13) and stores the second control program.

6. The vehicle power source system (1) according to any one of claims 1 to 5, wherein
the backup power source device (20) includes at least a housing (21) that accommodates the second DC/DC converter (22) and the second controller (26).
